# EUROPEAN PATENT APPLICATION

(11) **EP 4 064 419 A1**
(43) Date of publication of application: **28.09.2022**
(21) Application number: 21217956.8
(22) Date of filing: 28.12.2021
(51) Int. Cl.: H01M 10/613, H01M 10/625, H01M 10/6563, H01M 50/204, H01M 50/218, H01M 50/249, H01M 10/617

(54) **COOLING STRUCTURE FOR BATTERY PACK**

(30) Priority: 25.03.2021 JP 2021051810
(71) Applicant: Suzuki Motor Corporation, Hamamatsu-shi, Shizuoka 432-8611 (JP)
(72) Inventor: WATANABE, Koichiro, Hamamatsu-shi, Shizuoka, 432-8611 (JP); AYAME, Hideo, Hamamatsu-shi, Shizuoka, 432-8611 (JP); YAMANASHI, Teppei, Hamamatsu-shi, Shizuoka, 432-8611 (JP)
(74) Representative: Henkel & Partner mbB

(57) **Abstract**

[Problem to be Solved] To improve air circulation efficiency inside a sealed-type battery pack to achieve simplified structure, uniform temperature distribution inside the battery pack, and expected cooling effects.

[Solution] A plurality of battery modules (31, 32) is provided inside a battery case. The battery case includes lateral surfaces (151, 261) inclined such that a width of a front side is narrower than a width of a rear part in a vehicle longitudinal direction in a plan view, and includes a blower fan (5) to draw air inside the battery case through an inlet (50) and to pressure-feed the air to outlets (45) through a blower duct (4). The inlet (50) is opened in a portion that is a middle part in a width direction in the rear part of the battery case and that is above a first group of battery modules (31). The outlets (45) are arranged adjacent to lateral surfaces of the rear part of the battery case and oriented in a front direction, and forms a blowout air flow (Fa) blowing forward along the inclined lateral surfaces (151, 261) of the battery case.

## Description

### [Technical Field]

The present invention relates to a cooling structure for a battery pack mounted in a vehicle.

### [Background Art]

A battery pack mounted in a vehicle, for example, a battery pack for an electric vehicle, is configured such that a plurality of modules, composed of a plurality of secondary batteries, is arranged in a flat case and the battery pack is arranged on a vehicle floor part or under the floor in order to increase capacity while securing vehicle cabin space or storage space. Since the secondary batteries generate heat during charging and discharging, the battery pack includes a cooling structure.

The cooling structure for the battery pack includes an open-air type that introduces outside air, and a sealed type that uses a heat pump. The former has challenges against penetration of rainwater and dust, and the latter requires a compressor or a radiator outside the battery pack (see Patent Literature 1), which has made it impossible to complete the cooling system with only the battery pack itself, causing complication of the system and further causing problems such as condensate generated in an internal evaporator.

### [Citation List]

### [Patent Literature]

[Patent Literature 1] JP 2011-011632 A

### [Summary of Invention]

### [Problems to be Solved by the Invention]

Accordingly, a system including a blower fan inside a sealed-type battery pack to achieve uniform temperature distribution inside the battery pack, while achieving efficient dissipation of heat from a battery case as a heat dissipation member to the outside is being reconsidered.

The present invention has been made in view of such circumstances, and an object of the present invention is to improve air circulation efficiency inside a battery pack, and achieve simplified structure, uniform temperature distribution inside the battery pack, and anticipated cooling effects.

### [Means for Solving the Problems]

In order to accomplish the above object, the present invention relates to
a cooling structure for a battery pack comprising a plurality of battery modules inside a battery case that is substantially sealed, wherein
the battery case includes lateral surfaces inclined such that a width of a front side is narrower than a width of a rear portion in a vehicle longitudinal direction in a plan view, functions as a heat dissipation member as the battery case is substantially formed of a heat conductive material, and includes a blower fan to draw air inside the battery case through an inlet and to pressure-feed the air to outlets through a blower duct,
the plurality of battery modules includes a first group of battery modules fixed and arranged with an interval between each other in the rear portion inside the battery case and a second group of battery modules fixed and arranged with an interval between each other on a front side of the first group of battery modules in a vehicle longitudinal direction, the battery modules of the second group being juxtaposed with their respective longitudinal directions being aligned with the vehicle longitudinal direction,
the inlet is opened in a portion that is a middle portion in a width direction in the rear portion of the battery case and that is above the first group of battery modules, and
the outlets include left and right outlets arranged adjacent to respective lateral surfaces of the rear portion of the battery case and oriented in a front direction, and configured to form a blowout airflow blowing forward along the inclined lateral surfaces of the battery case.

### [Advantageous Effects of Invention]

With the configuration, in the cooling structure for a battery pack according to the present invention, air drawn from the middle portion of the group of battery modules in the rear portion inside the case (air heated by heat exchange with the group of battery modules) is pressure-fed by the blower fan to the left and right outlets arranged adjacent to the respective lateral surfaces in the rear portion of the battery case and oriented in the front direction, and thereby a blowout airflow blowing forward along the inclined lateral surfaces of the battery case is formed. The blowout air cooled by dissipating heat to the outside through heat exchange at the lateral surfaces of the battery case is made to circulate inside the battery case. In a process in which the blowout air passing through gaps in the battery modules of the groups (mainly the gaps in the longitudinal direction) is drawn and collected into the inlet of the blower fan, the battery modules are cooled, and heat dissipation to the outside is promoted by heat exchange at the upper surface of the battery case.

Specifically, air circulation and heat transfer are induced between a lateral portion or a peripheral portion of the battery case, which serves as an area of heat dissipation through heat transfer via a mounting structure to a vehicle body and contact with the outside air, and the middle portion of the group of the battery modules which tends to accumulate heat. This makes it possible to suppress temperature rise in the battery modules and to achieve uniform temperature distribution.

In addition, with the configuration of blowing air from the outlets that are arranged adjacent to the lateral surfaces on the rear portion of the battery case and oriented in the front direction, spaces on the lateral sides of the battery case function as blower passages that also serve as heat exchange areas. This makes it possible to circulate cooling air to wide areas within the battery case with a minimal blower duct, and to advantageously reduce duct size, simplify the device, and reduce costs.

### [Brief Description of Drawings]

[Figure 1] Figure 1 is perspective view showing an appearance of a battery pack.
[Figure 2] Figure 2 is a perspective view showing the inside of the battery pack.
[Figure 3] Figures 3 is a plan view showing the inside of the battery pack.
[Figure 4] Figure 4 is a cross sectional view along line A-A in Figure 1.
[Figure 5] Figure 5 is a plan view showing the flow of air inside the battery pack.

### [Mode for Carrying Out the Invention]

Hereinafter, an embodiment of the present invention will be described in detail with reference to the drawings.

### (Overview of Battery Pack)

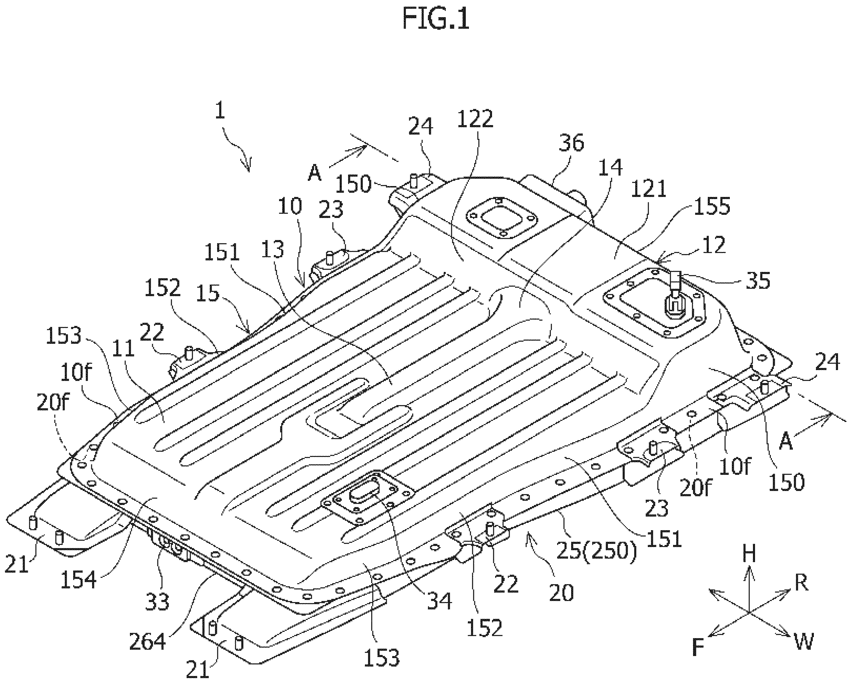

A battery pack 1 according to an embodiment of the present invention has generally a flat shape, except for an elevated portion 12 in a rear portion, adapted for mounting under the floor of a vehicle, as shown in Figure 1. In the following descriptions, unless otherwise stated, "front and rear" refers to a front side and a rear side in a vehicle longitudinal direction FR, "left and right" refers to a left side and a right side in a vehicle width direction W when facing the front side F in the vehicle longitudinal direction, and "upper and lower" corresponds to an upper side and a lower side in a vehicle height direction H.

The battery pack 1 has a plurality of battery modules 31, 32 provided inside a battery case composed of an upper case 10 and a lower case 20, as shown in Figure 1 to Figure 4. The battery modules 31, 32 are each modularized by holding a plurality of secondary battery cells (e.g., lithium ion secondary batteries) connected in series with each other in a boxshaped or a frame-shaped inner case in a stacked state.

The upper case 10 and the lower case 20 are formed in a shell or a tray form with press-formed articles made of metal having high heat conductivity, such as steel, stainless steel, and aluminum alloys, and so the upper case 10 and the lower case 20 themselves function as a member to dissipate heat to the outside.

The upper case 10 constituting an upper part of the battery pack 1 has a ridge portion 13 formed to extend in the vehicle longitudinal direction FR in a portion of an upper surface 11 extending from a front portion to a rear portion in the vehicle longitudinal direction, the portion being the center in the vehicle width direction W, as shown in Figure 1. On each left and right side of the ridge portion 13, three sub ridge portions (reinforcement beads) extending parallel to the vehicle longitudinal direction FR are formed. A meeting portion 14 with the ridge portion 13 on an inclined surface 122 on the front side of the elevated portion 12 is formed in a funnel shape that rises and expands toward the elevated portion 12.

The upper surface 11 of the upper case 10 is generally formed to be flat as a whole, although having the ridge portion 13 and the sub ridge portions. In contrast, the rear portion of the upper case 10 is formed with the elevated portion 12 elevated so as to be housed in lower space of a kick-up portion under rear seats of the vehicle. Internal space, which is expanded upwards by the elevated portion 12, is the space for installing component portions such as a blower duct 4 and a blower fan 5 which constitute a cooling system and is also a heat dissipation space separated from the battery modules 31, 32, as described later.

In the state in which the battery modules 31, 32 and control devices thereof are housed in the lower case 20, component portions, such as the blower duct 4 and the blower fan 5 constituting the cooling system, are arranged, and necessary wiring is completed, a flange portion 20f around the lower case 20 and a flange portion 10f of the upper case 10 are joined and integrated using bolts or the like through a sealing member 20c, so that the battery pack 1 is configured to ensure it is waterproof and airtight.

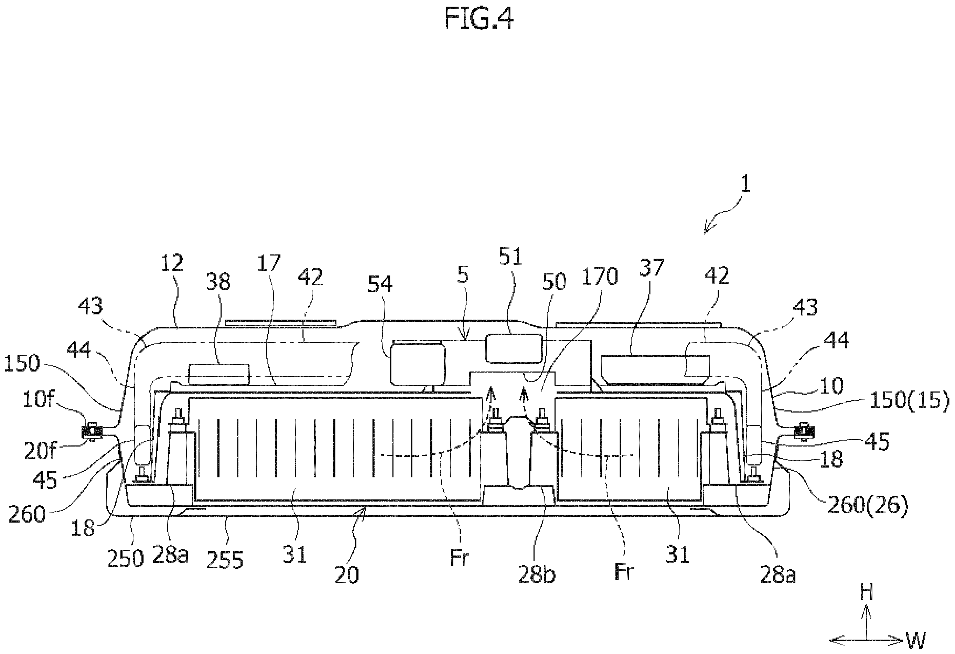

The lower surface of the lower case 20 is secured with a support frame 25 serving as a support frame of the battery pack 1. Although detailed illustration is omitted, the support frame 25 is configured in a ladder form with a pair of left and right side frames 250 and a plurality of cross frames 255 (Figure 4) extending in the vehicle width direction W and rigidly connected between the left and right side frames 250.

The battery pack 1 has four mounting brackets 21, 22, 23, 24 on each left and right side as mounting portions to the vehicle body. Of these mounting brackets, the mounting brackets 22, 23, 24, except the front end bracket, are composed of upper brackets joined to the flange portion 10f of the upper case 10 and lower brackets joined to the flange portion 20f of the lower case 20 in the battery pack 1. The battery pack 1 is fixed to the vehicle body by clamping the bolts, which are inserted to bolt holes of the respective mounting brackets 21, 22, 23, 24 from a lower side, to weld nuts of vehicle body-side mounting portions.

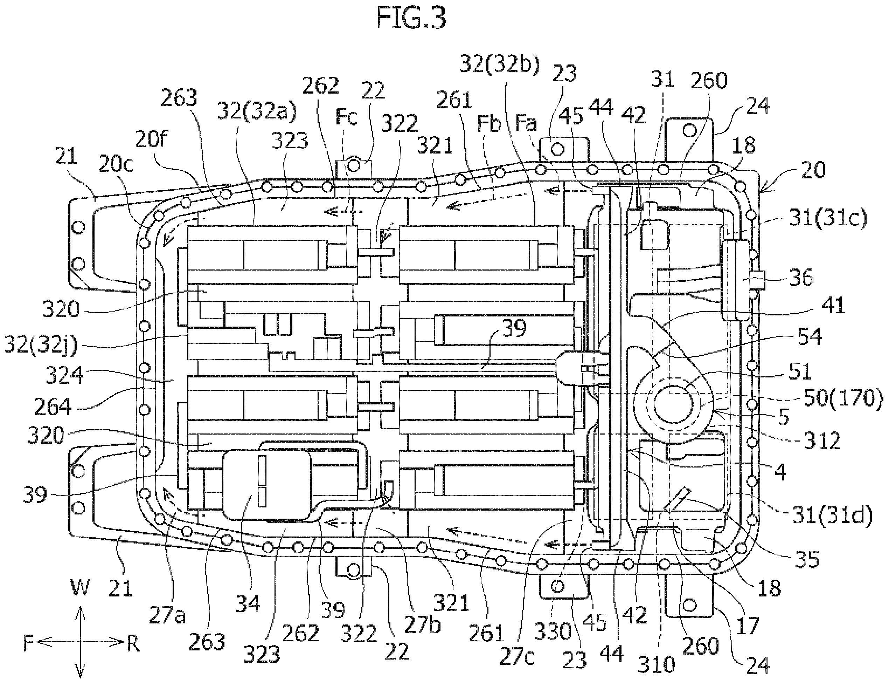

Note that the battery pack 1 is provided with a high voltage connector 33 on the front end surface of the lower case 20 for power input and output to a drive motor of the vehicle, and is also provided with a high voltage connector 36 on the rear surface of the upper case 10 (elevated portion 12) for charging. On the upper surface 11 of the upper case 10, a service plug 34 is provided to disconnect electric power to the battery modules 31, 32 during inspection or emergency. On an upper surface 121 of the elevated portion 12 of the upper case 10, a control connector 35 is provided. The battery modules 31, 32 are connected in series by a bus bar partially denoted by sign 39 in Figure 3, together with a junction box connected to each of the high voltage connectors 33, 36 and the service plug 34.

### (Battery Module Arrangement)

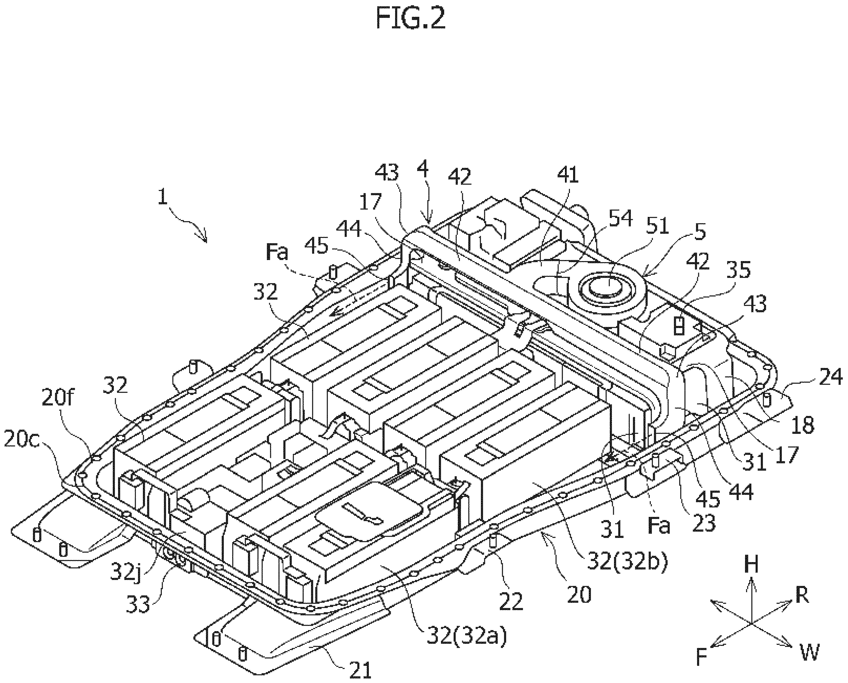

Inside the battery pack 1, four battery modules 32 (32a, 32j) are arranged side by side in a frontmost portion with a gap 320 between each other and with their respective longitudinal direction being aligned with the vehicle longitudinal direction FR, as shown in Figures 2 and 3. In a middle portion of the battery pack 1 that is behind the battery modules 32 (32a, 32j), four battery modules 32 (32b) are arranged in a similar arrangement, the battery modules 32 (32b) being separated from the four battery modules 32 (32a, 32j) with a gap 322 extending in the vehicle width direction. In other words, the four battery modules 32 (32b) in the middle portion are arranged side by side with the gap 320 between each other and with their respective longitudinal direction being aligned with the vehicle longitudinal direction FR.

In the illustrated example, the second module 32j from the right in the frontmost portion is a junction box including a relay circuit that supplies/disconnects electric power to the high voltage connector 33. However, this function may be integrated into the junction box 38 in the elevated portion 12 and the module 32j may be a battery module, for example. Therefore, the module 32j is described as the battery module 32 for the sake of convenience.

In the rear portion inside the battery pack 1, four battery modules 31 (31c, 31d) are juxtaposed with a gap 330 from the battery modules 32b in the middle portion, the battery modules 31 (31c, 31d) being juxtaposed with gaps 310 and 312 between each other and with their respective longitudinal directions being aligned with the vehicle width direction W, as shown by broken lines in Figure 3. Of these battery modules, the two battery modules 31d on the left side are half-sized modules having fewer secondary battery cells and being shorter in module longitudinal direction than the other battery modules.

Each of the battery modules 31, 32 are fixed to reinforcement frames 27a, 27b, 27c, 28a, 28b provided in an inner bottom portion of the lower case 20. Specifically, as shown in Figure 3, the battery modules 32 in the frontmost portion and the middle portion are bolted, at both their front and rear end portions in the longitudinal direction, to the reinforcement frames 27a, 27b, 27c provided at three places separated in the front and rear direction over an area from the frontmost portion to the middle portion of the inner bottom portion of the lower case 20 and extending in the vehicle width direction W. As shown in Figure 4, the four battery modules 31 at the rear portion are bolted, at both their left and right end portions in the longitudinal direction, to the reinforcement frames 28a, 28b provided separately at both end portions and a middle portion in the rear portion of the inner bottom portion of the lower case 20 and extending in the vehicle longitudinal direction FR.

Note that in the following descriptions, the four battery modules 31 (31c, 31d) in the rear portion of the battery pack 1 may be collectively referred to as a first group 31 of battery modules. The eight battery modules 32 (32a, 32b) in the frontmost portion and the middle portion of the battery pack 1 described above may be collectively referred to as a second group 32 of battery modules.

### (Lateral Shape of Battery Pack)

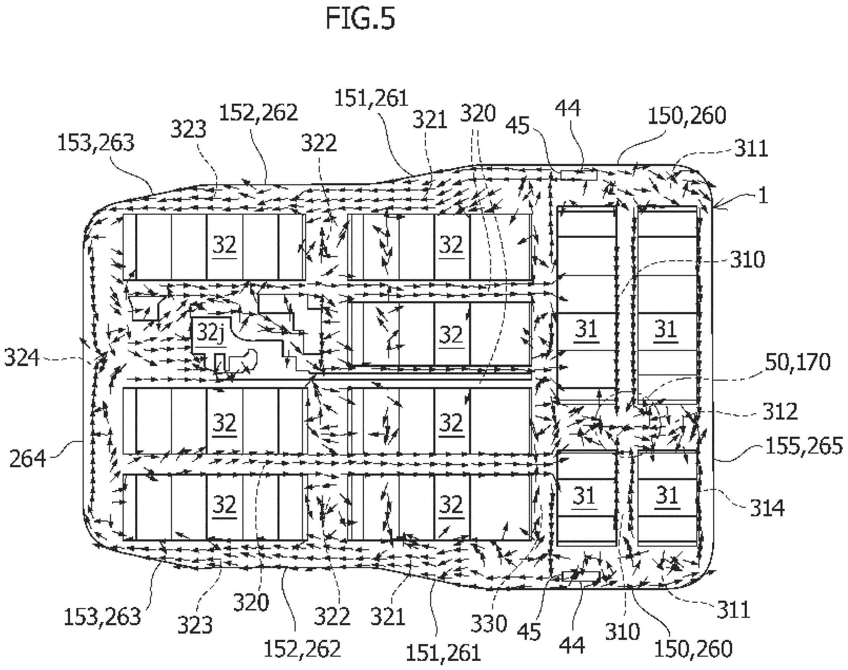

As described before, the battery pack 1 has a flat shape that is longer in the vehicle longitudinal direction FR than in the vehicle width direction W, adapted for mounting on the under portion of the vehicle body. Moreover, as shown in Figures 3 and 5, the battery pack 1 has a gradually narrower shape (tapered shape) as it includes lateral surfaces (151, 261, 153, 263) inclined so that the width of the front side is narrower than the width of the rear portion in the vehicle longitudinal direction in a plan view.

Specifically, as shown in Figure 1 or Figure 5, each of the lateral surfaces of the upper case 10 of the battery pack 1 includes a rear lateral surface 150 which extends substantially parallel to the vehicle longitudinal direction and is not inclined in a plan view, a first inclined lateral surface 151 continuous to the front side of the rear lateral surface 150, a middle lateral surface 152 continuous to the front side of the first inclined lateral surface 151 and not inclined in a plan view, and a second inclined lateral surface 153 continuous to the front side of the middle lateral surface 152, so that the width of the upper case 10 is gradually reduced in stages from the rear side to the front side in the vehicle longitudinal direction.

Similarly, each of the lateral surfaces of the lower case 20 also includes a rear lateral surface 260 which extends substantially parallel to the vehicle longitudinal direction and is not inclined in a plan view, a first inclined lateral surface 261 continuous to the front side of the rear lateral surface 260, a middle lateral surface 262 continuous to the front side of the first inclined lateral surface 261 and not inclined in a plan view, and a second inclined lateral surface 263 continuous to the front side of the middle lateral surface 262, so that the width of the lower case 20 is gradually reduced in stages from the rear side to the front side in the vehicle longitudinal direction.

With the lateral shape as described above, the battery pack 1 has lateral space 321, 323 that is gradually narrowed in stages from the rear side to the front side in the vehicle longitudinal direction, the lateral space 321, 323 being formed between the battery modules 32 (32a, 32b) in a most lateral portion of the second group 32 of battery modules and the lateral surfaces (150-153, 260-263) of the battery pack 1 as shown in Figures 3 and 5. The cooling system described below is configured on the assumption of this configuration.

### (Cooling System of Battery Module)

As shown in Figure 2 to Figure 4, on the upper side of the four battery modules 31 arranged in the rear portion of the battery pack 1, a support plate 17 is provided for arranging the blower duct 4 and the blower fan 5 that constitute the cooling system.

The support plate 17 is fixed to the reinforcement frame 28a via a leg portion 18 on both sides in the vehicle width direction. The leg portion 18 is formed with an inverted U-shaped member that is formed by folding both ends of a frame member, which extends in the vehicle width direction W along the lower surface of the support plate 17, downward, and bolted to the reinforcement frame 28a at each lower end portion (flange portion).

The support plate 17 is made to extend at a height approximately equal to the upper surface 11 of the upper case 10 with a gap to the upper surface of the battery module 31. The support plate 17 is provided so as to divide the internal space of the elevated portion 12 of the upper case 10 from the lower side including the battery modules 31, except for an opening portion 170 approximately at the center and a periphery portion thereof. The support plate 17 has a gap to the lateral surface 150 and the rear surface 155 of the elevated portion 12.

As shown in Figure 3, and Figures 4 and 5, the opening portion 170 of the support plate 17 is opened above a crossing portion between a gap 310 extending in the vehicle width direction W in the middle of the first group 31 of battery modules in the rear portion of the battery pack 1 and a gap 312 extending in the vehicle longitudinal direction between the end surfaces of the left and right battery modules 31c, 31d in the first group 31 of battery modules.

At approximately the center portion of the support plate 17 in the vehicle width direction W, the blower fan 5 is provided. As the blower fan 5, a centrifugal fan (sirocco fan or turbo fan) is preferably used. The blower fan 5 is fixed onto the support plate 17 by bolts or the like with a rotation shaft direction being aligned with a vehicle height direction H, and an inlet 50 under a fan case facing the opening portion 170 of the support plate 17. In the illustrated example, a sirocco fan with a motor arranged inside a fan hub is used to reduce upward protrusion of a motor housing.

Note that a control device 37 is provided on the right side of the blower fan 5 to perform battery charge/discharge management and cell balance control, and a junction box 38 for the high voltage connector 36 is provided on the left side of the blower fan 5. The blower duct 4 (branch duct portion 42) is provided along a front edge portion of the support plate 17 that is in front of the control device 37 and the junction box 38.

As shown in Figures 2 to 4, the blower duct 4 includes a proximal portion 41 extending forward (oblique forward) from a discharge port 54 of the blower fan 5, the branch duct portion 42 branching at a front end portion of the proximal portion 41 and extending on both left and right sides, and descending portions 44 each extending downward from a bending portion 43 adjacent to the respective rear lateral surfaces 150, 260 of the battery case 1. The blower duct 4 communicates with outlets 45 extending forward from the lower portions of the descending portions 44 and opening forward.

The branch duct portion 42 has a flow passage in an approximately pentagonal or trapezoidal cross section including an inclined surface in an upper front portion along the inclined surface 122 of the elevated portion 12. The descending portion 44 is formed to be flat in the vehicle width direction while the width of the descending portion 44 in the vehicle longitudinal direction increases toward the rear side in order to secure the flow passage cross section in accordance with the branch duct portion 42, and the outlets 45 are in a vertically long nozzle shape that is flat in the vehicle width direction.

### (Air Circulation and Cooling Operation inside Battery Pack)

In the cooling system configured as described in the foregoing, as the blower fan 5 operates, the air which is heated through heat exchange with each of the battery modules 31c, 31d in the rear portion of the battery pack 1 is drawn and collected at the inlet 50 via the opening portion 170, pressure-fed from the proximal portion 41 of the blower duct 4 to the descending portions 44 through the branch duct portion 42, and then blown forward from the left and right side outlets 45 as shown by arrows Fa in Figure 3.

As shown in Figure 3 (and Figure 5), the air blown out from each of the left and right side outlets 45 flows forward (Fa) along the rear lateral surfaces 150, 260, and is deflected inward on the first inclined lateral surfaces 151, 261 (Fb). The air then moves forward through the lateral space 321 formed with the battery modules 32b.

In this case, the blowout air is cooled by contact (heat exchange) with the rear lateral surfaces 150, 260 or the first inclined lateral surfaces 151, 261 of the battery pack 1. The cooled air moves further forward through the lateral space 323 (Fc), and is further cooled by contact (heat exchange) with the middle lateral surfaces 152, 262 or the second inclined lateral surfaces 153, 263. Then, the cooled air flows into the space 324 in the frontmost portion.

On the other hand, part of the airflow, which is deflected inward on the first inclined lateral surfaces 151, 261 and moves forward through the lateral space 321, also flows into the gap 322 between the battery modules 32a and 32b, which branches inward from the lateral space 323 on an extension of the deflection direction (Fb).

By the air blown out forward from each of the left and right side outlets 45 as described above, peripheral portions (321, 323, 324) of the second group 32 (32a, 32b) of battery modules become relatively positive pressure zones inside the battery pack 1. On the other hand, the gaps 310, 312 in the first group 31 (31c, 31d) of battery modules and the periphery thereof, where suction for the inlet 50 (Fr) by the blower fan 5 is generated, become relatively negative pressure zones.

In relation to this, in the three gaps 320 extending in the vehicle longitudinal direction in the second group 32 (32a, 32b) of battery modules between the relatively positive pressure zones (321, 323, 324) and the negative pressure zones (310, 312), an airflow flowing backward as shown in Figure 5 is generated. The airflow returns to the negative pressure zones (310, 312) via the gap 330 in the vehicle width direction.

The descriptions so far are summarized below:
(i) the first group 31 of battery modules is cooled when the air heated through heat exchange with the first group 31 of battery modules is drawn and collected into the inlet 50 of the blower fan 5;
(ii) the heated air that is drawn and collected is pressure-fed through the blower duct 4, blown out forward from the outlets 45, and cooled through heat exchange with the lateral surfaces (150, 260, 151, 261, 152, 262) of the battery pack 1;
(iii) the second group 32 of battery modules is cooled by heat exchange performed in the process in which the cooled air is circulated to the rear portion of the battery pack through the gaps 320, 322, 330, 312; and
(iv) in parallel with the above operation, dissipation of heat to the outside air and to the vehicle body structure through the upper case 10 and the lower case 20 including the lateral surfaces (150, 260, 151, 261, 152, 262) of the battery pack 1 is promoted.

In particular, the configuration that allows air drawn by the blower fan 5 that is arranged approximately in the center of the rear portion of the battery pack to be blow out from the outlets 45 arranged on both the side portions of the rear portion of the battery pack makes it possible to generate an overall air circulation inside the battery pack through the lateral space (321, 323), the forefront space (324), and the gaps (320, 322, 330, 310, 312) between the battery modules 31, 32 of the battery pack, with use of the blower duct 4 that is small in comparison with the size of the battery pack 1. As a result, it is possible to achieve cooling and uniform temperature distribution in the battery modules 31, 32, as well as cooling of air through heat exchange and dissipation of heat to the outside using the lateral surfaces (150, 260, 151, 261, 152, 262) of the battery pack 1.

Furthermore, the second group 32 of battery modules includes the front group 32a of battery modules juxtaposed in the front portion in the vehicle longitudinal direction of the battery cases (10, 20), and the middle group 32b of battery modules aligned with each other and juxtaposed on the rear side of the front group of battery modules and between the front group of battery modules and the first group of battery modules, and the first inclined lateral surfaces 151, 261 are provided to extend on the side of the battery module 32b of the most lateral portion. With the configuration, as described before, the air blown forward from each of the left and right side outlets 45 is guided by the first inclined lateral surfaces 151, 261 so as to be deflected inward (Fb), and flows forward through the lateral space 321 beside the battery module 32b of the most lateral portion.

More exactly, in this case, high-speed blowout air flows along the first inclined lateral surfaces 151, 261, which causes an inductive airflow on the inner side in the vehicle width direction. As the inductive airflow flows along the lateral surfaces of the battery module 32b, the heat from the battery modules 32b is collected to the inductive airflow.

Then, the inductive airflow joins the blowout airflow cooled through heat exchange with the first inclined lateral surfaces 151, 261, and flows further forward. As the airflow moves forward to the first inclined lateral surfaces 151, 261, the flow passage cross-section area of the lateral space 321 is reduced, which suppresses reduction in flow rate, and therefore the air flow reaches the branch portion with the gap 322 with the flow rate maintained.

Here, some part of air flows into the gap 322. However, since the flow rate is maintained, the remaining air flows into the lateral space 323. In this process, heat recovery from the battery module 32a of the most lateral part and dissipation of heat to the outside through heat exchange at the middle lateral surfaces 152, 262 and the second inclined lateral surfaces 153, 263 are also performed.

Moreover, the heat of the battery modules 32 close to the center area that is not adjacent to the lateral surfaces 15, 26 of the battery cases (10, 20) is collected by an airflow which is generated due to pressure gradients of the relatively positive pressure zones (321, 323, 324) and the negative pressure zones (310, 312) described above and which flows rearward along the gap 320. The airflow is drawn into the inlet 50 of the blower fan 5, together with the heat of the first group 31 of battery modules, through the gap 330 and the gap 312.

In other words, the air in the gap 320 is replaced with the air cooled through heat exchange on the lateral surfaces 15, 26 and the front end surfaces 154, 264 of the battery cases (10, 20), and thereby the battery modules 32 close to the center area are cooled.

As described in the foregoing, the cooling system according to the present invention basically draws and collects the air heated inside the battery cases (10, 20) into the inlet 50 of the blower fan 5 positioned approximately at the center of the rear portion of the battery pack, and pressure-feeds the air to both the end portions in the vehicle width direction through the blower duct 4 to simply blow out the air forward from the outlets 45. However, by using the lateral space 321, 323 on the extension of the outlets 45 as a blower passage serving as an area of heat dissipation to the outside and to the vehicle body structure using the lateral surfaces 15, 26 of the battery cases (10, 20) and as a cooling area of the blowout air, the cooling effect and uniform temperature distribution in the battery modules 31, 32 can be expected.

As described before, the mounting brackets 21, 22, 23, 24 as mounting portions of the battery pack 1 to the vehicle body are provided on the lateral surfaces 15, 26 of the battery cases (10, 20). Blowing air to the lateral space 321, 323 is advantageous not only in terms of heat dissipation to the outside air but also in terms of heat dissipation to the vehicle body structure.

Note that in the embodiment, description has been given of the case in which four battery modules 31c, 31d, each oriented in the vehicle width direction, are provided as the first group 31 of battery modules, and four front battery modules 32a and four middle battery modules 32b, each oriented in the vehicle longitudinal direction, are provided as the second group 32 of battery modules. However, the number of battery modules may be other than above as long as their orientations are maintained.

In the embodiment, description has been given of the case in which the blower duct 4 and the blower fan 5 are installed on the support plate 17 having the opening portion 170 below the inlet 50. However, the blower duct 4 and the blower fan 5 may be installed on a frame-shaped support structure. However, if the upper parts of the gaps 310, 312 are opened toward the elevated portion 12, the gaps 310, 312 cannot function as suction ducts. Accordingly, at least an area from the periphery of the inlet 50 to the upper parts of the gaps 310, 312 needs to be shielded (not necessarily completely) by a member on the plate or the like.

In the embodiment, description has also been given of the case in which the inlet 50 of the blower fan 5 (fan case) is arranged to face the opening portion 170 of the support plate 17 so that the fan case and the support plate 17 are separated. This configuration is advantageous in terms of preventing vibration of the blower fan 5 from being transmitted to the support plate 17. However, the gap around the inlet 50 and the opening portion 170 may be shielded by a vibration-insulated material such as an elastic seal.

In the embodiment, description has also been given of the case in which the inlet 50 of the blower fan 5 and the opening portion 170 are provided above the crossing portion between the gap 310 in the vehicle width direction and the gap 312 in the vehicle longitudinal direction in the first group 31 of battery modules. However, the inlet 50 and the opening portion 170 may be provided above the gap 312 in the vehicle longitudinal direction at a position shifted forward or rearward from the crossing part. In such a case in which the inlet 50 and the opening portion 170 are provided on the front side of the crossing part, the blower duct 4 can also be configured to branch from the rear side in the vehicle longitudinal direction of the blower fan 5.

Moreover, in the embodiment, description has been given of the case in which the lateral surfaces 15, 26 of the battery cases (10, 20) include the first inclined lateral surfaces 151, 261 and the second inclined lateral surfaces 153, 263 which are inclined in a plan view, and the middle lateral surfaces 152, 262, which are not inclined in a plan view, provided therebetween. However, depending on the arrangement of the second group 32 of battery modules, only one inclined surface including a section of the first inclined lateral surfaces 151, 261 may be provided instead.

Although the embodiment of the present invention has been described in the foregoing, the present invention is not limited to the embodiment disclosed. It is to be stated that various modifications and changes are further possible within the scope of the present invention.

### [Reference Signs List]

- 1: Battery pack
- 4: Blower duct
- 5: Blower fan
- 10: Upper case
- 11: Upper surface
- 12: Elevated portion
- 15, 26: Lateral surface
- 17: Support plate
- 18: Leg portion
- 20: Lower case
- 31, 31c, 31d: Battery module (first group of battery module)
- 32, 32a, 32b: Battery module (second group of battery module)
- 41: Proximal portion
- 42: Branch duct portion
- 43: Bending portion
- 44: Descending portion
- 45: Outlet
- 50: Inlet
- 51: Motor
- 54: Discharge port
- 150, 260: Rear lateral surface
- 151, 261: First inclined lateral surface
- 152, 262: Middle lateral surface
- 153, 263: Second inclined lateral surface
- 154, 264: Front end surface
- 155, 265: Rear surface
- 170: Opening portion
- 310, 312, 320, 322, 330: Gap
- 321, 323: Lateral space
- 324: Front space

## Claims

1. A cooling structure for a battery pack comprising a plurality of battery modules inside a battery case that is substantially sealed, wherein
the battery case includes lateral surfaces inclined such that a width of a front side is narrower than a width of a rear portion in a vehicle longitudinal direction in a plan view, functions as a heat dissipation member as the battery case is substantially formed of a heat conductive material, and includes a blower fan to draw air inside the battery case through an inlet and to pressure-feed the air to outlets through a blower duct,
the plurality of battery modules includes a first group of battery modules fixed and arranged with an interval between each other in the rear portion inside the battery case and a second group of battery modules fixed and arranged with an interval between each other on a front side of the first group of battery modules in a vehicle longitudinal direction, the battery modules of the second group being juxtaposed with their respective longitudinal directions being aligned with the vehicle longitudinal direction,
the inlet is opened in a portion that is a middle portion in a width direction in the rear portion of the battery case and that is above the first group of battery modules, and
the outlets include left and right outlets arranged adjacent to respective lateral surfaces of the rear portion of the battery case and oriented in a front direction, and configured to form a blowout airflow blowing forward along the inclined lateral surfaces of the battery case.

2. The cooling structure for a battery pack according to claim 1, wherein
the second group of battery modules includes a front group of battery modules juxtaposed in a front portion in the vehicle longitudinal direction of the battery case and a middle group of battery modules aligned with each other and juxtaposed on a rear side of the front group of battery modules, and
the inclined lateral surfaces of the battery case include first inclined lateral surfaces extending along sides of the middle group of battery modules.

3. The cooling structure for a battery pack according to claim 2, wherein the first group of battery modules includes a left-side group of battery modules and a right-side group of battery modules aligned with each other, the battery modules of the left-side group and the right-side group having their respective longitudinal directions aligned with the vehicle width direction, and the inlet is opened above a crossing part between a gap extending in the vehicle width direction between the battery modules of the left-side group and between the battery modules of the right-side group and a gap in the vehicle longitudinal direction between an end surface of the left-side group of battery modules and an end surface of the right-side group of battery modules.

4. The cooling structure for a battery pack according to claim 2, wherein each of the lateral surfaces of the battery case includes, on a side of the front group of battery modules, a middle lateral surface that is continuous to a front side of the first inclined lateral surface and that is substantially not inclined in a plan view, and a second inclined lateral surface continuous to a front side of the middle lateral surface, and front sides of the second inclined lateral surfaces are continuous to a front end surface of the battery case.

5. The cooling structure for a battery pack according to claim 3, wherein an elevated portion that bulges upward is formed on a rear part of an upper surface of the battery case in the vehicle longitudinal direction, a support plate extending along an upper surface of the first group of battery modules is provided inside the elevated portion, the blower fan is fixed and arranged on the support plate with the inlet facing down, and the support plate has an opening part formed in a region above the crossing part and facing the inlet.
